# EUROPÄISCHE PATENTSCHRIFT

(11) **EP 2 053 539 B1**
(45) Veröffentlichungstag und Bekanntmachung des Hinweises auf die Patenterteilung: **25.01.2012**
(21) Anmeldenummer: 07119373.4
(22) Anmeldetag: 26.10.2007
(51) Int. Cl.: G06K 9/00, G06K 9/68

(54) **Klassifizieren von Objekten sowie Erkennung von deren Position und Orientierung im Raum**
Classification of objects and identification of their position and spatial orientation
Classification des objets et reconnaissance de leur position et de leur orientation dans l'espace

(43) Veröffentlichungstag der Anmeldung: 29.04.2009
(73) Patentinhaber: SICK AG, 79183 Waldkirch (DE)
(72) Erfinder: Erb, Frank, 79114, Freiburg (DE); Tomm, Alexander, 79312, Emmendingen (DE); Schopp, Thomas, 79112, Freiburg (DE)
(74) Vertreter: Ludewigt, Christoph

(56) Entgegenhaltungen:
- EP-A2- 1 380 986
- CHEN C-S ET AL: "RANSAC-BASED DARCES: A NEW APPROACH TO FAST AUTOMATIC REGISTRATION OF PARTIALLY OVERLAPPING RANGE IMAGES" IEEE TRANSACTIONS ON PATTERN ANALYSIS AND MACHINE INTELLIGENCE, IEEE SERVICE CENTER, LOS ALAMITOS, CA, US, Bd. 21, Nr. 11, November 1999 (1999-11), Seiten 1229-1234, XP000897104 ISSN: 0162-8828
- HON-KEAT PONG ET AL: "Object Detection Using a Cascade of 3D Models" COMPUTER VISION - ACCV 2006 LECTURE NOTES IN COMPUTER SCIENCE;;LNCS, SPRINGER-VERLAG, BE, Bd. 3852, 2005, Seiten 284-293, XP019027451 ISBN: 3-540-31244-7
- CHEN ET AL: "3D free-form object recognition in range images using local surface patches" PATTERN RECOGNITION LETTERS, ELSEVIER, AMSTERDAM, NL, Bd. 28, Nr. 10, 15. Juli 2007 (2007-07-15), Seiten 1252-1262, XP022069312 ISSN: 0167-8655
- ANDREA FROME ET AL: "Recognizing Objects in Range Data Using Regional Point Descriptors" COMPUTER VISION - ECCV 2004 LECTURE NOTES IN COMPUTER SCIENCE;;LNCS, SPRINGER-VERLAG, BE, Bd. 3023, 2004, Seiten 224-237, XP019005872 ISBN: 3-540-21982-X
- CHIN SENG CHUA ET AL: "3D FREE-FORM SURFACE REGISTRATION AND OBJECT RECOGNITION" INTERNATIONAL JOURNAL OF COMPUTER VISION, KLUWER ACADEMIC PUBLISHERS, NORWELL, US, Bd. 17, Nr. 1, Januar 1996 (1996-01), Seiten 77-99, XP000554284 ISSN: 0920-5691
- CHEN C-S ET AL: "A FAST AUTOMATIC METHOD FOR REGISTRATION OF PARTIALLY-OVERLAPPING RANGE IMAGES" PROCEEDINGS ON THE INTERNATIONAL CONFERENCE ON COMPUTER VISION, 4. Januar 1998 (1998-01-04), Seiten 242-248, XP001159740
- LEPETIT V ET AL: "Monocular Model-Based 3D Tracking of Rigid Objects: A Survey" FOUNDATIONS AND TRENDS IN COMPUTER GRAPHICS AND VISION, NOW PUBLISHERS INC.,HANOVER, MA, US, Bd. 1, Nr. 1, 2005, Seiten 1-89, XP007903009 ISSN: 1572-2740
- PAQUET E ET AL: "Description of shape information for 2-D and 3-D objects" SIGNAL PROCESSING. IMAGE COMMUNICATION, ELSEVIER SCIENCE PUBLISHERS, AMSTERDAM, NL, Bd. 16, Nr. 1-2, 1. September 2000 (2000-09-01), Seiten 103-122, XP004216271 ISSN: 0923-5965
- VIOLA P. ET AL: 'Rapid object detection using a boosted cascade of simple features' PROCEEDINGS 2001 IEEE CONFERENCE ON COMPUTER VISION AND PATTERN RECOGNITION. CVPR 2001. KAUAI, HAWAII, DEC. 8 - 14, 2001; [PROCEEDINGS OF THE IEEE COMPUTER CONFERENCE ON COMPUTER VISION AND PATTERN RECOGNITION], LOS ALAMITOS, CA, IEEE COMP. SOC, US Bd. 1, 08 Dezember 2001, Seiten 511 - 518, XP010583787 ISBN: 978-0-7695-1272-3
- CAMPBELL R J ET AL: "A survey of free-form object representation and recognition techniques", COMPUTER VISION AND IMAGE UNDERSTANDING, ACADEMIC PRESS, US, vol. 81, no. 2, 1 February 2001 (2001-02-01), pages 166-210, XP002340585, ISSN: 1077-3142, DOI: DOI:10.1006/CVIU.2000.0889
- GREENSPAN M: "The sample tree: a sequential hypothesis testing approach to 3D object recognition", COMPUTER VISION AND PATTERN RECOGNITION, 1998. PROCEEDINGS. 1998 IEEE COMPUTER SOCIETY CONFERENCE ON SANTA BARBARA, CA, USA 23-25 JUNE 1998, LOS ALAMITOS, CA, USA,IEEE COMPUT. SOC, US, 23 June 1998 (1998-06-23), pages 772-779, XP010291728, DOI: DOI:10.1109/CVPR.1998.698691 ISBN: 978-0-8186-8497-5

## Beschreibung

Die Erfindung betrifft ein Verfahren zum Klassifizieren von Objekten und/oder zur Erkennung von deren Position und/oder Orientierung im Raum nach dem Oberbegriff von Anspruch 1 sowie eine entsprechende Vorrichtung nach dem Oberbegriff von Anspruch 12.

Die automatisierte Klassifizierung realer dreidimensionaler Objekte stellt große Herausforderungen an die Sensorik und die nachgeordnete Bearbeitung. Ein wichtiges Applikationsgebiet ist die Lager- und Fördertechnik etwa in der Automobilbranche oder in anderen Bereichen. Dabei müssen Form und Lage von Objekten erkannt werden, um die anfallenden Aufgaben autonomen Robotersystemen übertragen zu können. Sollen dabei nicht nur fest vorgegebene Trajektorien abgefahren werden, so müssen diese Systeme die Fähigkeit besitzen, ihre Handlungsweisen adaptiv an die Umgebung anzupassen. Konkret könnte es sich dabei um die Depallettierung von Einbauteilen oder deren Montage handeln, wo die Greifsteuerung des Roboters die genaue Lage der Objekte benötigt, um das passende Greifwerkzeug auszuwählen und zu positionieren.

Heutige Montageroboter greifen die zu montierenden Bauteile meist noch aus mechanischen Vorrichtungen, welche speziell für diese Anwendung entworfen wurden und welche die Lage sowie die Klasse des Bauteils eindeutig festlegen. Damit entfällt die Notwendigkeit einer Klassifikation, das System ist aber auch entsprechend unflexibel, und eigentlich möchte man die Bauteile direkt aus einer Transportkiste oder von einem Förderband greifen können.

Die Sensorik herkömmlicher Systeme verwendet für die Bestimmung der Klasse und der Lage der Objekte meist noch Algorithmen, bei denen die Objekte nur in zwei Dimensionen modelliert sind. Bei der Reduktion von drei auf zwei Dimensionen können aber zu viele Informationen verloren gehen, so dass die Klassifikation der Objekte nicht mehr eindeutig festgelegt werden kann. Applikationen können daher meist nur aufgabenspezifisch gelöst werden und sind nicht portierbar. Im Allgemeinen darf die Lage und Orientierung der Objekte im Raum nicht beliebig sein, um Klassifizierungsfehler zu vermeiden.

Daher ist erwünscht, Objekte dreidimensional zu erfassen und deren Lage somit in drei Freiheitsgraden der Position und drei Freiheitsgraden der Orientierung im Raum zu ermitteln. Diese sechs Freiheitsgrade werden im Folgenden häufig als die sechsdimensionale oder 6D-Lage des Objekts bezeichnet.

Im Stand der Technik sind Ansätze bekannt, Hypothesen über die Klasse des Objekts und dessen 6D-Lage aus dreidimensionalen Punktwolken oder sonstigen Repräsentationen der Objektoberfläche zu erzeugen und anschließend mit einer Teststrategie zu verifizieren. Dabei wird man aber vor die Wahl gestellt, entweder eine schnelle Strategie mit einer hohen Fehlerrate zu erkaufen oder eine rechenintensive und genau Verifikationsstrategie zu verwenden, deren Laufzeit aber in der Praxis gemessen etwa an der Fördergeschwindigkeit der Objekte vor einem Roboter zu lang ist.

Zur Verwendung in solchen dreidimensionalen Verfahren sind unter anderem 3D-Deskriptoren bekannt, denen Verteilungen von Objekteigenschaften in Form von Histogrammen zu Grunde liegen. Hierunter fallen etwa Spin Images, 3D-shape-contexts, Geometric hashing oder COSMOS. Für weitere Informationen besonders zu Spin-Images wird ergänzend auf die Veröffentlichung von Andrew E. Johnson, "Spin-Images: A Representation for 3D-Surface Matching", Dissertation, Carnegie Mellon University, Pittsburgh, Pennsylvania, USA verwiesen. Für Anwendungen in der robotergestützten Automatisierungstechnik sind die Ergebnisse jedenfalls innerhalb einer akzeptablen Laufzeit nicht genau genug.

Ein bekannter Algorithmus für die Verifikation von Hypothesen ist der RANSAC-Algorithmus von Fischler et al. aus "Random sample consensus: a paradigm for model fitting with applications to image analyses and automated cartography", Communications of the ACM, Vol. 24/6, Juni 1981, ACM Press 1981. Hierbei wird eine Zufallsauswahl von Datenpunkten gewählt, um eine Hypothese zu erzeugen, bevorzugt die kleinste mögliche Auswahl, die eine Aussage ermöglicht, und dies wird solange per Iteration wiederholt, bis eine Hypothese verifiziert werden kann. Eine direkte Anwendung zur dreidimensionalen Abtastung eines Objekts und dessen Klassifikation und 6D-Lage-Bestimmung ist dort aber nicht angegeben.

In der Arbeit von Shan et al. "Linear Model Hashing and Batch RANSAC for Rapid and Accurate Object Recognition", Proceedings of the 2004 IEEE Computer Society Conference on Computer Vision and Pattern Recognition (CVPR'04), IEEE, 2004 wird ein solcher RANSAC-Algorithmus und ein Bayes-Klassifikator für eine Objekterkennung und deren 6D-Lage-Bestimmung verwendet. Auch dieser Algorithmus ist für die praktische Anwendung zu langsam.

Schließlich ist bekannt, die Lage eines Objektes, etwa in der Repräsentation als Polygonnetz der Oberfläche, gegen ein entsprechendes Modellobjekt zu verschieben und zu verdrehen, bis die Abstände der realen Objektpunkte von den Modellpunkten minimiert sind. Dafür können beispielsweise im Grunde lang bekannte Least-Mean-Square-Verfahren eingesetzt werden. Hierbei wird die 6D-Lage nicht nur als Hypothese getestet, sondern die Hypothese wird weiter optimiert (ICP-Verfahren, Iterative Closest Point). Nachteilig an dem die ICP-Verfahren ist die verhältnismäßig langsame Auswertung, die innerhalb akzeptabler Laufzeiten keine große Zahl von Hypothesen testen kann. Darüber hinaus neigt das ICP-Verfahren dazu, in lokalen Extrema zu konvergieren, und es ist nicht in der Lage, dies von dem gewünschten globalen Extremum zu unterscheiden. Das Ergebnis ist in einem solchen Fall eine fehlerhafte Klassifikation und 6D-Lage-Bestimmung.

In der Arbeit von Chu-Song Chen et al., "RANSAC-based DARCES: A new Approach to Fast Automatic Registration of Partially Overlapping Range Images"" IEEE Transactions on Pattern Analysis and Machine Intelligence Vol. 21(11), November 1999, Seiten 1229-1234 wird ein RANSAC-Algorithmus beschrieben, mit dem im Falle von teilüberlappenden Entfernungsbildern diejenige Transformation bestimmt wird, welche ein 3D-Modell mit einem aufgenommenen Objekt in Übereinstimmung bringt. Dazu wird aus zunächst drei Kontrollpunkten der Szenerie eine hypothetische Transformation bestimmt, welche diese Kontrollpunkte auf das Modell transformiert. Anschließend wird ein Überlappungsmaß berechnet, wie gut die Übereinstimmung insgesamt ist. In einer Erweiterung werden mehr als drei Kontrollpunkte verwendet, und für jeden weiteren Kontrollpunkt zunächst geprüft, ob die hypothetische Transformation für ihn genügende Übereinstimmung liefert. Ist das nicht der Fall, wird die Hypothese verworfen. Nur Hypothesen, bei denen alle Kontrollpunkte gut genug übereinstimmen, wird die aufwändige Berechnung des Überlappungsmaßes tatsächlich vorgenommen.

Aus Hon-Keat Pong et al., "Object Detection Using a Cascade of 3D Models", Computer Vision - ACCV 2006 Lecture Notes in Computer Science, Springer Verlag Bd. 3852 (2005), Seiten 284-293 ist bekannt, 3D-Modelle in 2D-Bildern zu finden, indem kaskadiert Modelle mit zunehmendem Detaillierungsgrad (LOD, level of detail) geprüft werden.

Daher ist Aufgabe der Erfindung, eine Klassifizierung und 6D-Lage-Bestimmung für Objekte anzugeben, die sowohl schnell als auch genau genug arbeitet.

Diese Aufgabe wird durch ein Verfahren gemäß Anspruch 1 und eine Vorrichtung gemäß Anspruch 13 zum Klassifizieren von Objekten gelöst. Durch die Kaskadierung von Hypothesentests können verschiedene Verfahren ressourcensparend kombiniert werden, ergänzen sich dabei in ihrer Genauigkeit und reduzieren zugleich ganz erheblich die Laufzeit. Damit kann sichergestellt werden, dass teure, also laufzeitintensive Hypothesentests nur auf wirklich plausible gute Kandidaten angewandt werden, während schlechte Hypothesen durch kurze, vergleichsweise einfache Hypothesentests rasch ausgeschlossen werden können.

Mit der Erfindung verbindet sich der weitere Vorteil einer einfachen und universellen Integrationsmöglichkeit in komplexe Systeme mit gemeinsamen Koordinatenbezügen und der Möglichkeit, komplexe Objekte in kürzester Zeit zu modellieren, zu unterscheiden und zu erkennen. Dabei werden um bis zu einen Faktor 10 bessere Laufzeiten erreicht als mit herkömmlichen Verfahren, so dass bei Montage an einem Förderband innerhalb weniger Millimeter Förderstrecke eine Klassifikation und 6D-Lage-Bestimmung vorliegt, ohne hierdurch an Genauigkeit der Klassifikation einzubüßen. Durch diese Verbesserung der eingangs beschriebenen dreidimensionalen Klassifikatoren werden sie von der Theorie in die Praxistauglichkeit geholt.

Die Kaskade wird dabei vorteilhafterweise von dem Hypothesentest mit der kürzesten Laufzeit hin zu dem Hypothesentest mit der längsten Laufzeit abgearbeitet. Üblicherweise ist dabei der schnellste Hypothesentest zugleich auch der ungenaueste und der langsamste Hypothesentest auch der Beste. Mit dieser Art der kaskadierten Anordnung wird der erfindungsgemäß erreichte Geschwindigkeitsvorteil also weiter optimiert.

Die Modellobjektdaten weisen bevorzugt Modell-Histogramme auf, die jeweils ausgehend von einem Punkt der Modelloberfläche die Verteilung der Position oder einer Eigenschaft benachbarter Modelloberflächenpunkte beschreiben, insbesondere als Modell-Histogramme Spin-Images, 3D-shape-contexts oder Remissions-Images verwendet werden, und/oder wobei aus zumindest einem Teil der Messobjekt-Datenpunkte entsprechende Mess-Histogramme erzeugt werden. Diese Deskriptoren erlauben eine besonders genaue und schnelle Klassifikation. Bei der Wahl eines geeigneten Objekt-Deskriptors ist nämlich eine Reihe von Anforderungen zu beachten: der Deskriptor sollte für eine unvollständige Objektrepräsentation und zur 6D-Lagebestimmung geeignet, translationsinvariant und rotationsinvariant sein und komplexe Objekte, insbesondere in einer Objektrepräsentation als Punktwolke, in akzeptabler Implementierungszeit, mit akzeptabler Laufzeit und mit einem akzeptablen Speicheraufwand verarbeiten können. Hier bilden gerade die erfindungsgemäßen histogrammbasierten Ansätze eine gute Lösung, und darunter wiederum sind die genannten speziellen Histogramme besonders geeignet.

Die Modellobjektdaten werden bevorzugt eingelernt und/oder aus einer CAD-Datei berechnet und in einer Modellbibliothek abgelegt, und/oder Modell-Histogramme, die aufgrund von Symmetrien gleich oder sehr ähnlich sind, werden nur einmal in der Modellbibliothek abgelegt, und mittels Referenzierung oder Hashing zu den Modelloberflächenpunkten wird jeweils nicht das Modell-Histogramm, sondern nur ein Verweis auf das zugehörige Modell-Histogramm abgelegt, und/oder die Modell-Histogramme werden zur Datenreduktion komprimiert. Mit einem geeigneten Einlernverfahren können somit nahezu beliebige Objekte klassifiziert werden. Andererseits ist auch denkbar, auf vorhandene CAD-Daten zurückzugreifen, so dass insgesamt vollständige Flexibilität besteht. Wenn gleiche oder ähnliche Histogramme nur einmal abgelegt werden, kann ein großer Teil der erforderlichen Speicherressourcen eingespart werden. Dies kann auch erreicht oder zusätzlich verbessert werden, indem die Histogramme für sich mit einem Komprimierungsverfahren gespeichert werden.

In vorteilhafter Weiterbildung werden Korrespondenzen, insbesondere Punkt- oder Polygonkorrespondenzen zwischen Modelloberflächenpunkten und Messoberflächenpunkten ermittelt, indem die Ähnlichkeit zwischen Modell-Histogrammen und Mess-Histogrammen bewertet wird, insbesondere durch eine Entfernungsnorm oder eine Korrelation, wobei ein geringer Anteil von Korrespondenzen mit der besten Ähnlichkeitsbewertung für die Hypothesentests verwendet wird, insbesondere ein Anteil von höchstens einem Prozent einer Verteilung der Ähnlichkeitsbewertung aller möglichen Vergleiche zwischen Modell-Histogrammen und Mess-Histogramm. Die so ermittelten Korrespondenzen bilden ein Reservoir aus gut oder sehr gut übereinstimmenden Histogrammen, die, wenn sie der Hypothesenbildung zugrundegelegt werden, zu den aussichtsreichsten Hypothesen führen können. Das erfindungsgemäße Verfahren verwendet somit weniger Zeit auf den Test ohnehin nicht besonders aussichtsreicher Hypothesen und kann dadurch mit weiter reduzierter Laufzeit angewendet werden

Die Kaskade der Hypothesentests wird bevorzugt auf einem RANSAC-Algorithmus basierend mehrfach durchlaufen, bis eine Hypothese in der geforderten Genauigkeit verifiziert, eine Höchstlaufzeit abgelaufen oder eine Obergrenze einer Anzahl zu testender Hypothesen überschritten ist, wobei für jeden Durchlauf der Kaskade eine Hypothese für die Objektklasse, Position und Orientierung des Messobjekts aufgestellt wird, indem eine Untermenge von Punktkorrespondenzen, insbesondere drei Punktkorrespondenzen, zufällig unter der Maßgabe bestimmt wird, dass alle Punktkorrespondenzen der Untermenge zu derselben Objektklasse gehören, und aus der den Punktkorrespondenzen der Untermenge zugehörigen Position und/oder Orientierung eine Position und Orientierung des Messobjekts abgeleitet wird. Der auf einem Zufallssample beruhende RANSAC-Algorithmus ist besonders geeignet für eine Klassifikation ohne Modellwissen. Indem jeweils eine minimale Anzahl von Punktkorrespondenzen ausgewählt wird, die eine Verifikation oder Falsifikation der Hypothese zulassen, werden die Laufzeiten besonders klein gehalten. Ein RANSAC-Algorithmus funktioniert aber wie das gesamte erfindungsgemäße Verfahren auch dann, wenn die Hypothesen durch Modellwissen eingeschränkt werden können.

Die Hypothesentests weisen bevorzugt eines oder mehrere der folgenden Verfahren auf: einen Bounding-Box-Test, bei dem eine Auswahl von Messobjekt-Datenpunkten daraufhin überprüft wird, ob sie innerhalb eines Hüllkörpers des Modellobjekts liegt, einen Range-Image-Test, eine Positions- und Orientierungsoptimierung, insbesondere ein iteratives Least-Mean-Square-Verfahren, bei der die Messobjekt-Datenpunkte mit einem Oberflächengitter eines Modellobjekts in optimale Übereinstimmung gebracht werden, oder einen Nearest-Neighbour-Test, der insbesondere die 0. Iteration der Lageoptimierung basierend auf einer Auswahl der Messobjekt-Datenpunkte ist. Besonders vorteilhaft ist, wenn alle diese Verfahren vorgesehen sind, wobei abweichend von der angegebenen Reihenfolge der Nearest-Neighbour-Test der Positions- und Orientierungsoptimierung vorgeschaltet ist. Der anfängliche Bounding-Box-Test ist sehr schnell und geeignet, unzutreffende Hypothesen rasch auszuschließen. Er wäre weniger geeignet, eine Hypothese mit hinreichender Genauigkeit zu verifizieren. Mit einem Range-Image-Test, bei dem Entfernungsbilder miteinander verglichen werden, sind ebenfalls sehr rasch Ergebnisse zu erzielen. Gerade Feinaussagen zur Orientierung des Objekts im Raum können hiermit aber noch ungenau sein. Mit einem Nearest-Neighbour-Test kann rasch festgestellt werden, wie gut Modell und Messobjekt bereits übereinstimmen. Erst wenn all diese vergleichsweise unaufwändigen Hypothesentests erfolgreich waren, wird die auf Messpunkten der gesamten Modelloberfläche basierende relativ teure Positions- und Lageoptimierung ausgeführt. Mit dieser Kaskade gelangt man also schnell zu einem guten Klassifikationsergebnis einschließlich einer 6D-Lage.

Dabei weist der Range-Image-Test besonders bevorzugt die folgenden Schritte auf:
- Aufnehmen eines Mess-Entfernungsbildes des Messobjekts, bei dem die Entfernungen insbesondere farb- oder graucodiert sind;
- Berechnen eines virtuellen Modell-Entfernungsbildes des Modellobjekts der Hypothese in Position und Orientierung der Hypothese und insbesondere aus der Perspektive der Aufnahmeeinrichtung;
- Vergleichen von Mess-Entfernungsbild und Modell-Entfernungsbild, insbesondere Berechnen einer Abstandsnorm oder einer Korrelation und
- Akzeptieren der Hypothese, wenn der Vergleich im Rahmen einer vorgegebenen Toleranz Übereinstimmung zeigt.

Entfernungsbilder kann man als zweidimensionale Histogramme auffassen, bei denen Entfernungen statt Häufigkeiten gegen eine Fläche aufgetragen sind und deren Abstandsnorm mit verhältnismäßig geringem Aufwand berechnet werden kann. Gleichzeitig werden aber durch die Entfernungsdaten der Entfernungsbilder drei Dimensionen berücksichtigt. Mit seinem linearen Aufwand und durch die Überprüfungen sowohl der Messdaten gegen die Modelloberfläche als auch umgekehrt ist diese Verifikationsstrategie schnell und robust, um relativ weit abweichende Hypothesen rasch zu erkennen. Feiner abweichende Hypothesen, besonders in den Rotations-Freiheitsgraden, werden unter Umständen von dieser Strategie nicht erkannt. Dies gelingt jedoch sicher mit den nachgeordneten Verfahren, die somit nur noch auf Hypothesen angewandt werden müssen, bei denen ihre Genauigkeit auch wirklich gefordert ist. Der Range-Image-Test liefert damit einen schnellen, schon recht genauen Vorfilter für die teuren nachgeordneten Optimierungsverfahren, um die Kaskade häufig schon früh abbrechen zu können und somit die Laufzeit weiter zu optimieren.

Zur weiteren Beschleunigung können die Hypothesen bevorzugt in einer Pipeline parallelisiert getestet werden, indem die nächste Hypothese schon erzeugt wird, während eine oder mehrere vorherige Hypothesen noch getestet werden und/oder indem die Kaskade eines weiteren Hypothesentests gestartet wird, während die vorherige Hypothese noch getestet wird, so dass insbesondere jeder einzelne Hypothesentest innerhalb der Kaskade parallel auf einem eigenen Baustein ausgeführt werden kann, und/oder indem parallel in mehreren Threads oder auf mehreren Bausteinen mehrere Hypothesen erzeugt und getestet werden. Das erfindungsgemäße Verfahren hat also den Vorteil, dass es leicht parallelisierbar ist und damit von entsprechender Hardwarebeschleunigung voll profitieren kann. Diese Parallelisierungsmöglichkeiten gibt es sowohl innerhalb der Kaskade als auch durch das Vorsehen mehrerer Kaskaden nebeneinander.

Vorteilhafterweise wird das Messobjekt vorab segmentiert, indem Untermengen der Messobjekt-Datenpunkte, die jeweils zu einem Segment gehören, zusammengefasst werden und für jedes Segment für sich Klasse, Position und Orientierung bestimmt wird, um somit zusammengesetzte Messobjekte oder eine Mehrzahl neben- oder übereinander angeordneter Messobjekte zu klassifizieren. Das erfindungsgemäße Verfahren wird dadurch sowohl für eine größere Anzahl von Objektklassen als auch für eine größere Anzahl von Messobjekten in dem Erfassungsbereich der Aufnahmeeinrichtung einsetzbar.

Die Messobjekt-Datenpunkte werden vorteilhafterweise dreidimensional durch Abtasten mit einem Laserscanner oder mittels eines entfernungsauflösenden Bildsensors als Gesamtaufnahme oder durch Zusammensetzen von Zeilen eines relativ bewegten Messobjekts aufgenommen, wobei die Entfernungen durch ein Lichtlaufzeitverfahren, ein Lichtschnittverfahren, aktive Triangulation durch Auswerten eines Kontrastmusters oder Stereoskopie bestimmt werden. Insbesondere die zeilenweisen Abtastung ist gut geeignet für auf einem Förderband vorbeibewegte Objekte in der Automatisierung, etwa durch Roboter. Alternativ können andere dreidimensionale Bildgebungsverfahren eingesetzt werden.

Die erfindungsgemäße Vorrichtung kann auf ähnliche Weise weitergebildet werden und zeigt dabei ähnliche Vorteile. Insbesondere können in ihrer Auswertungseinheit Ausgestaltungen des erfindungsgemäßen Verfahrens implementiert werden. Derartige vorteilhafte Merkmale sind weiterhin beispielhaft, aber nicht abschließend in den sich an die unabhängigen Ansprüche anschließenden Unteransprüchen beschrieben.

Um die dreidimensionalen Bilddaten zu erzeugen, kann ein Laserscanner oder eine Stereokamera vorgesehen sein, und als Bildsensor kann ein pixelauflösender zeilen- oder matrixförmigen Aufnahmechip eingesetzt werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung eines erfindungsgemäßen Sensors über einem Förderband mit mehreren zu klassifizierenden Objekten;
- Fig. 2: ein Ablaufschema als Gesamtüberblick über eine Ausführungsform des erfindungsgemäßen Verfahrens;
- Fig. 3: ein Ablaufschema zur Erläuterung der Anlage der Modellbibliothek;
- Fig.4: ein Ablaufschema zur Erläuterung der Verarbeitung von Rohdaten der Aufnahmeeinrichtung zu einem Polygonnetz der Messobjektoberfläche sowie zu Punktkorrespondenzen;
- Fig. 5: ein Ablaufschema zur Erläuterung der Generierung von Hypothesen;
- Fig. 6: ein Ablaufschema zur Erläuterung der kaskadierten Verifikation von Hypothesen; und
- Fig.7: ein Ablaufschema eines Range-Image-Verfahrens, das in einer Ausführungsform der Erfindung als einer der Hypothesentests innerhalb der Kaskade eingesetzt wird.

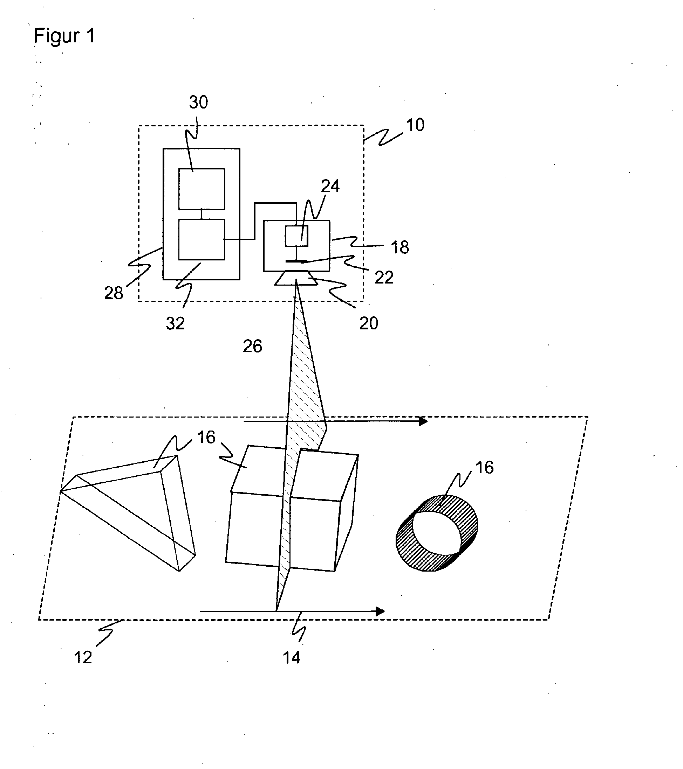

In der schematischen dreidimensionalen Darstellung gemäß Figur 1 ist ein erfindungsgemäßer Sensor 10 über einem Förderband 12 montiert, das sich in einer durch Pfeile 14 bezeichneten Richtung bewegt. Statt des Förderbandes 12 können Transportkisten oder andere Fördermittel eingesetzt werden. Auf dem Förderband 12 befinden sich mehrere Objekte 16, die in der Darstellung sehr schematisch als Zylinder, Würfel und Prismen angedeutet sind. In der Praxis handelt es sich bei den Objekten 16 beispielsweise um verschiedene Schrauben, Karosserieteile oder sonstige Bauteile, die von einem Roboter automatisiert gegriffen oder montiert werden sollen.

Ein Laserscanner scannt die Objekte 16 zeilenweise ab und nimmt Remissionsdaten des reflektierten Laserstrahls sowie über dessen Lichtlaufzeit Entfernungsdaten auf.

In einer alternativen Ausführungsform, die in Figur 1 dargestellt ist, wird als Aufnahmeelement statt eines Laserscanners 18 eine Kamera eingesetzt, welche die vorbeibewegten Objekte 16 erfasst und daraus Bilddaten erzeugt. Die Kamera weist ein Objektiv 20 und einen Bildsensor 22 auf, wobei dieser Bildsensor 22 beispielsweise ein auf CMOS- oder CCD-Technologie basierender Aufnahmechip sein kann.

Um dreidimensionale Daten erzeugen zu können, ist eine Kamerasteuerung 24 vorgesehen. Es sind unterschiedliche Verfahren zur Ermittlung der Entfernungen denkbar, also der dritten Tiefendimension, und alle diese dreidimensionalen Verfahren sind von der Erfindung umfasst. Beispielsweise kann eine Beleuchtung zum Aussenden von Lichtpulsen oder von moduliertem Licht vorgesehen sein, und aus der Lichtlaufzeit beziehungsweise Phasenverschiebung kann die Kamerasteuerung 24 mittels der Lichtgeschwindigkeit Entfernungen berechnen. Dies ist auch ein Messprinzip, nach dem der Laserscanner gemäß der zuerst vorgestellten Ausführungsform der Aufnahmeeinrichtung über die Laufzeit des Sendepulses oder die Phasenverschiebung des Scanstrahls Entfernungen bestimmen kann. Speziell sind hier auch in den Bildsensor 20 integrierte Lichtlaufzeitelemente bekannt, die auf der Photonmischdetektion (PMD) beruhen. Alternative dreidimensionale Bildgebungsverfahren sind Lichtschnittverfahren, aktive Triangulation, die ein Muster einer Kontrastmusterbeleuchtung im Objektbereich auswertet, oder auf einer Disparitätsschätzung gleicher Bildelemente einer stereoskopischen Doppelkamera beruhende Auswertungen.

Anstelle eines matrixförmigen Bildsensors 22 kann ein zeilenförmiger Aufnahmechip vorgesehen sein, der das Tiefenbild zeilenweise in jeweils einer Lesezeile 26 während der Relativbewegung der Objekte 16 gegenüber dem Sensor 10 durch das Förderband 12 aufnimmt und zusammensetzt.

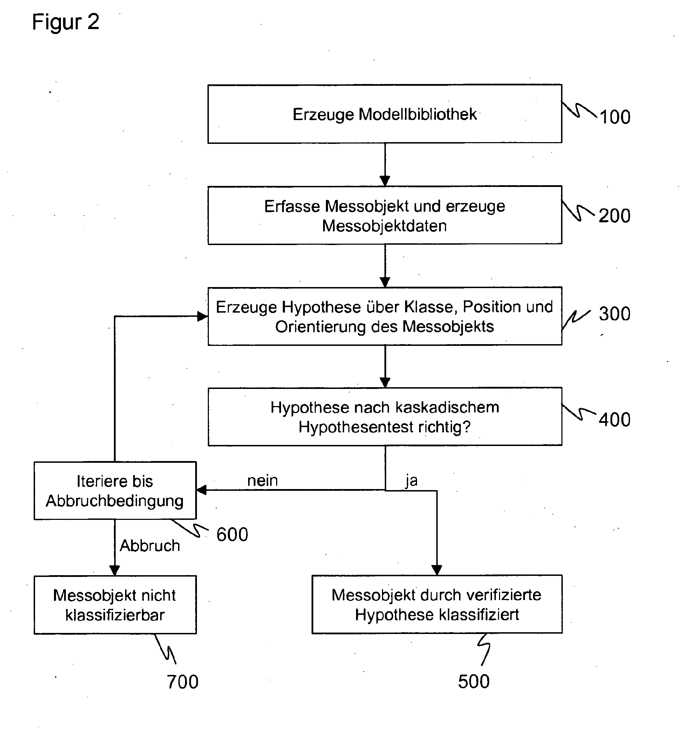

In einer Recheneinheit 28 befindet sich ein Speicher 30 mit einer Modellbibliothek und eine Auswertungseinheit 32. Die Recheneinheit 28 kann in den Sensor 10 integriert oder ein externer Rechner sein, der durch eine beliebige drahtlose oder drahtgebundene Schnittstelle mit der Aufnahmeeinheit 18 verbunden ist. In der Recheneinheit 28 ist das erfindungsgemäße Verfahren zu Objektklassifizierung und zur Feststellung der 6D-Lage eines Objekts 16 implementiert. Dieses Verfahren soll nachfolgend anhand der Figuren 2 bis 7 näher beschrieben werden.

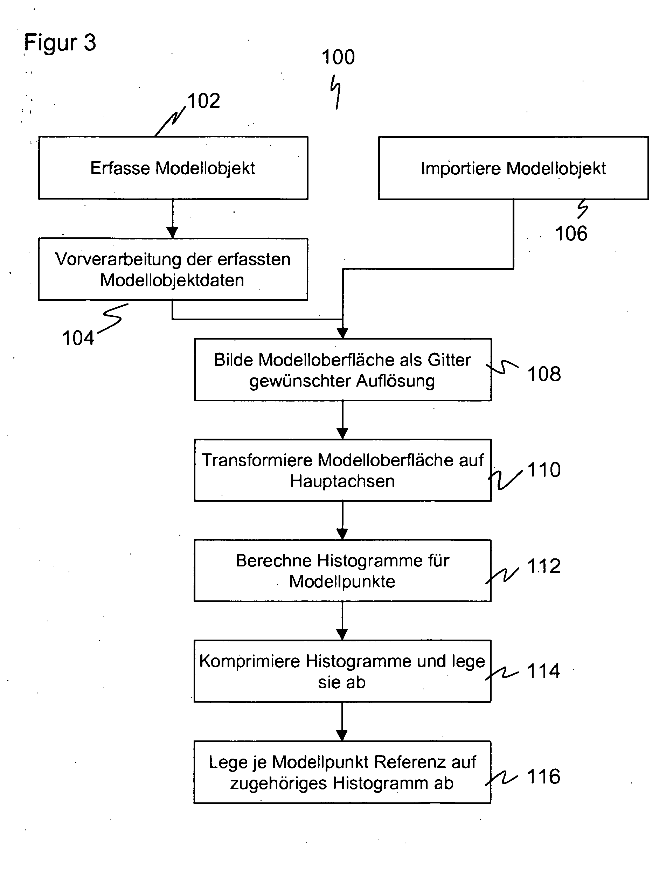

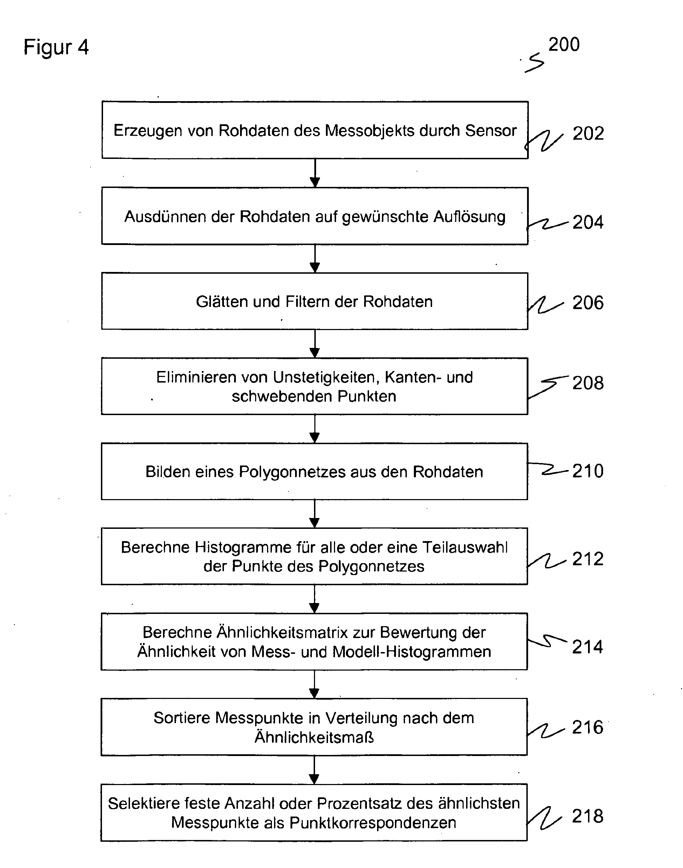

Figur 2 zeigt zunächst eine Übersicht über das erfindungsgemäße Klassifikationsverfahren als Ablaufdiagramm. In einem Vorbereitungsschritt 100 wird zunächst eine Modellbibliothek der zu klassifizierenden Objekte 16 erzeugt, die in dem Speicher 30 abgelegt wird (vgl. Figur 3). Während des Betriebs wird dann in einem Schritt 200 jeweils ein Messobjekt 16 von der Aufnahmeeinrichtung 18 erfasst, die entstehenden Bilddaten werden vorverarbeitet und in Form eines Polygonnetzes und von Punktkorrespondenzen zu Punkten der Modellobjekte dem weiteren Klassifikationsverfahren zur Verfügung gestellt (vgl. Figur 4).

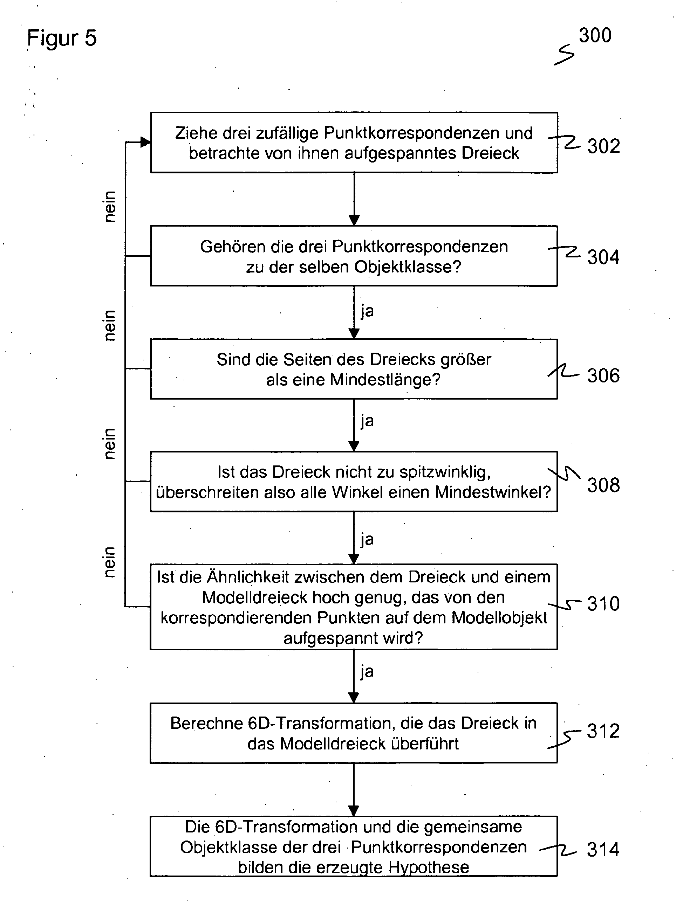

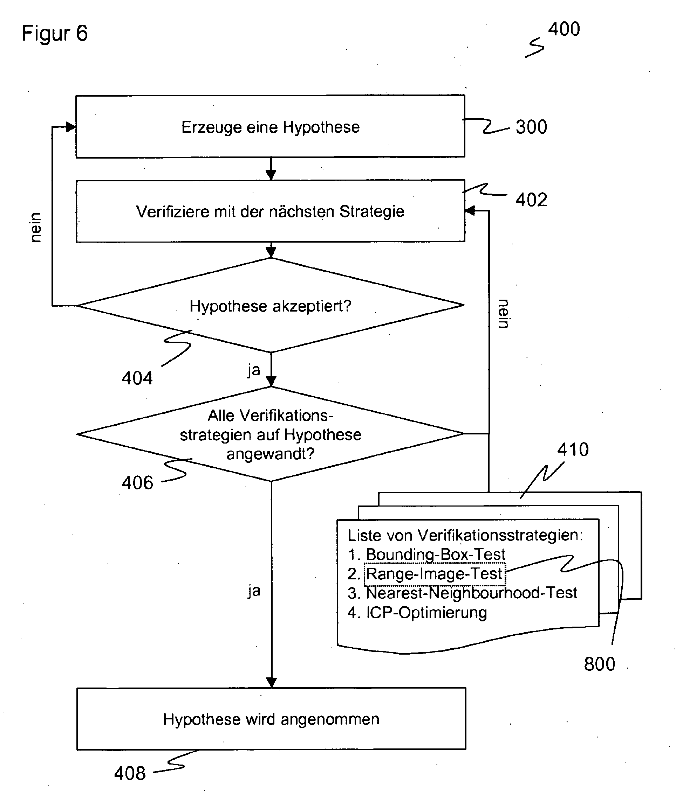

Die eigentliche Klassifikation findet dann in einem iterativen Verfahren statt, bei welchem nacheinander zunächst in einem Schritt 300 jeweils eine Hypothese über Klasse, Position und/oder Orientierung des Messobjekts 16 erzeugt (vgl. Figur 5) und anschließend in einem Schritt 400 diese Hypothese in einem kaskadierten Hypothesentestverfahren überprüft wird (vgl. Figur 6). Diese Iteration der Schritte 300 und 400 wird so lange fortgesetzt, bis in einem Schritt 500 eine Hypothese im Rahmen der geforderten Genauigkeit verifiziert werden kann und somit diese verifizierte Hypothese die gesuchte Objektklasse und/oder 6D-Lage ergibt, oder bis in einem Schritt 600 eine Abbruchbedingung erreicht ist, was in einem Schritt 700 zu der Ausgabe führt, dass das Messobjekt 16 nicht klassifiziert werden konnte. Dabei kann jede Abbruchbedingung gewählt werden, welche sicherstellt, dass das Verfahren terminiert. Bevorzugt gibt man eine Höchstzahl zu testender Hypothesen oder eine Höchstlaufzeit vor, welche dann der Ansprechzeit des Sensors 10 entspricht.

Figur 3 zeigt ein Ablaufschema, welches die Erzeugung der Modellbibliothek in dem Speicher 30 erläutert. In einem Schritt 102 wird ein Modellobjekt erfasst, um seine Oberfläche aufzunehmen. Bevorzugt erzeugt die Aufnahmeeinrichtung 18 die entsprechenden Oberflächendaten, es kann aber auch in einer anderen Vorrichtung geschehen. Die Modelldaten werden in einem Schritt 104 vorverarbeitet, etwa geglättet oder gefiltert, wie dies für die Messobjekte zu Figur 4 noch beschrieben wird. Als Alternative dazu, das Modellobjekt von einer Aufnahmeeinrichtung erfassen und somit einlernen zu lassen, können auch in einem Schritt 106 Modelldaten importiert werden, beispielsweise aus einer CAD-Datei.

Nach dem Einlernen oder dem Importieren liegen Daten der Modelloberfläche vor. Aus diesen Modelldaten wird in einem Schritt 108 ein Gitter oder ein Polygonnetz der gewünschten Auflösung erzeugt. Beispielsweise kann eine Größenordnung von 1000 Punkten der Modelloberfläche verbleiben. Um invariant von der eher zufälligen Lage des Objekts 16 beim Einlernen oder beim Import zu werden, werden die Daten per PCA (principle component analysis) auf ihre Hauptachsen transformiert und somit normiert.

Anschließend muss in einem Schritt 112 ein geeigneter Objektdeskriptor gewählt werden. Als besonders geeignet haben sich hier histogrammbasierte Ansätze gezeigt, da sie die Anforderungen an Laufzeit, Speicherbedarf und Genauigkeit am besten erfüllen. In dem Histogramm ist jeweils die Verteilung einer Eigenschaft der Modelloberflächenpunkte bezogen auf einen jeweiligen festen Punkt approximiert. Ein solches an einen Punkt gebundenes Histogramm der Modelloberflächenpunkte kann später mit einem Punkt der Messobjektoberfläche verglichen werden, um festzustellen, ob in diesem Punkt eine Ähnlichkeit oder Korrespondenz besteht. Da die Wahl des Objektdeskriptors entscheidend ist, genügt es im Allgemeinen nicht, eine beliebige die Modelloberfläche beschreibende Eigenschaft in einem beliebigen Histogramm abzulegen.

Stattdessen werden bevorzugt solche Histogramme eingesetzt, die zumindest in gewisser Weise rotationsinvariant sind. Dafür werden die Modelloberflächenpunkte nicht kartesisch, sondern in Zylinder- oder Kugelkoordinaten ermittelt. Über eine der Winkelkoordinaten wird dann das Histogramm gebildet. In diese Klasse fallen einerseits Spin Images und andererseits 3D-Shape-Contexts. Bei einem Spin Image wird um den betrachteten Punkt in R- und Z-Richtung von Zylinderkoordinaten ein zweidimensionales Histogramm aufgespannt, das die Häufigkeit weiterer Oberflächenpunkte in ϕ-Richtung zählt. Anders ausgedrückt wird die ϕ-Koordinate durch die Häufigkeit ersetzt, so dass ein Spin Image unabhängig von Rotationen um die Z-Achse ist. Dabei entspricht die Z-Achse der Normalen auf die Oberfläche des Modellobjekts durch den betrachteten Punkt. Nach einem ganz ähnlichen Konzept werden für 3D-Shape-Contexts Kugelkoordinaten verwendet, und anstelle von Kreisen wie bei den Spin Images werden Häufigkeiten weiterer Oberflächenpunkte in Kugelschalen, Winkelsegmenten ("Kuchenstücke") oder einer Kombination aus beidem ("Spinnennetze") ausgewertet.

Ein anderer histogrammbasierter Ansatz ist, das Histogramm über Abstände und Remissionen zu bilden. Dieses Histogramm oder Remissions-Image nähert also eine Verteilung an, in welchem Abstand sich wie viele Punkte mit ähnlichem Remissionsverhalten ("Helligkeit") befinden.

Schließlich ist denkbar, die Ansätze zu kombinieren, also mehrere Histogrammtypen zu einem Punkt auszuwerten, etwa Spin Images und remissionsbasierte Histogramme.

Je nach Auflösung können die Histogramme in einem Schritt 114 mit einem Komprimierungsverfahren komprimiert werden, etwa JPG, sofern später bei der Auswertung die zusätzliche Laufzeit für die Dekomprimierung in Kauf genommen werden kann. Die Histogramme werden komprimiert oder nicht komprimiert in dem Speicher 30 abgelegt.

Bei vielen Modellobjekten, besonders solchen mit Symmetrien, sind zahlreiche Histogramme untereinander identisch oder sehr ähnlich. Dann lohnt es sich, diese Histogramme in einem Schritt 116 jeweils nur einmal in dem Speicher 30 zu halten und Punkte, in denen diese Histogramme bestimmt werden, per Referenz oder Hashing-Tabelle auf das derart abgelegte Histogramm verweisen zu lassen, um Speicherplatz zu sparen.

Bei üblichen industriellen Klassifikationsaufgaben ist nur eine kleine Anzahl von Objekten 16 zu unterscheiden. Diese Objekte können nacheinander, aber auch zu verschiedenen Zeiten, jeweils mit dem soeben beschriebenen Verfahren eingelernt oder importiert werden, das aber an sich die Anzahl der Objekte 16 in der Modellbibliothek nur durch den Umfang des Speichers 30 begrenzt.

Das Ablaufschema der Figur 4 beschreibt, wie in einem Schritt 200 das Messobjekt von der Aufnahmeeinrichtung 18 erfasst, die entstehenden Rohdaten vorverarbeitet und Punktkorrespondenzen zu Modellobjekten in der Modellbibliothek des Speichers 30 ermittelt werden.

Zunächst erfasst in einem Schritt 202 die Aufnahmeeinrichtung 18 das Messobjekt 16 und erzeugt mit einem der zu Figur 1 beschriebenen Verfahren dreidimensionale Rohdaten. Diese Rohdaten werden anschließend in einem Schritt 204 von der durch die Aufnahmeeinrichtung 18 vorgegebenen Auflösung auf eine für die Objektklassifikation gewünschte Auflösung transformiert.

Die Rohdaten werden anschließend in einem Schritt 206 geglättet und gefiltert. Dies kann beispielsweise durch Faltung mit einem linearen oder gaussischen Filterkern geschehen. In einem Schritt 208 werden Unstetigkeiten, Kantenpunkte und schwebende Punkte eliminiert. In Unstetigkeiten und an Kanten lässt sich keine Normale definieren, wie sie etwa für Spin Images benötigt wird, und schwebende Punkte lassen keine Definition eines sinnvollen Gitternetzes (auch im folgenden als Polygonnetz, "polygon mesh" bezeichnet) zu.

Die derart gefilterten Rohdaten werden dann in einem Schritt 210 zu einem Polygonnetz verbunden, dessen Polygone die Oberfläche des Objekts 16 repräsentieren. Hier sind Dreiecks- und Vierecksnetze wegen der Einfachheit der Polygone bevorzugt.

Für alle Gitterpunkte des Polygonnetzes werden in einem Schritt 212 Histogramme berechnet, die denjenigen der Modellbibliothek entsprechen, also beispielsweise Spin Images. Da die Berechnung dieser Histogramme eine verhältnismäßig teure Operation ist, kann statt aller Gitterpunkte auch nur eine insbesondere zufällig ausgewählte Untermenge verwendet werden. Diese Untermenge muss die Oberfläche des Messobjekts 16 gut repräsentieren, so dass ohne Modellwissen nur eine zufällige Auswahl einer hinreichend großen Anzahl von Punkten genügt. Zumeist reichen 50-200 Punkte aus. Grundsätzlich können diese Histogramme des Messobjekts 16 ähnlich denjenigen der Modellbibliothek in den Schritten 114 und 116 komprimiert oder referenziert abgelegt werden, der Speichergewinn ist aber wegen der geringeren Zahl von Punkten deutlich herabgesetzt, und vor allem opfert man für diesen Speichergewinn wertvolle Laufzeit.

In einem Schritt 214 wird nun festgestellt, mit welchen Modell-Histogrammen die somit erzeugten Mess-Histogramme übereinstimmen. Alle Punktkorrespondenzen, wo dies der Fall ist, sind gute Kandidaten für einen Hinweis auf Übereinstimmung von Messobjekt 16 und einem Modellobjekt, welches dann auch die Klasse des Messobjekts 16 festlegt. Dazu wird eine Ähnlichkeitsmatrix zwischen den Punkten der Messobjektoberfläche des Messobjekts 16 und Punkten der Modellbibliothek erstellt. Diese Matrix kann vollständig sein, es wird also jeder Punkt des Messobjekts 16 mit jedem Punkt aller Modellobjekte verglichen, oder es findet auf Seiten des Messobjekts 16 oder der Modellobjekte eine Auswahl statt, die ohne Modellwissen erneut bevorzugt zufällig ist.

Zur Bewertung der Ähnlichkeit können beliebige mathematische Maße herangezogen werden, mit der die Ähnlichkeit zweier Wertetabellen bewertet werden kann, als die sich die Histogramme verstehen lassen. In der Erfindung bewährte Beispiele sind die Lₚ-Normen, insbesondere L₁ oder L₂, oder ein Korrelationskoeffizient.

Anhand ihres Ähnlichkeitsmaßes lassen sich mögliche Punktkorrespondenzen in einem Schritt 216 zu einer Ähnlichkeitsverteilung sortieren. Behält man in einem Schritt 218 nur den rechten Teil dieser Verteilung, also die ähnlichsten Histogramme, so findet man dadurch die gewünschten Punktkorrespondenzen. Hier kann eine feste Anzahl oder ein fester Prozentsatz derjenigen der Ähnlichkeitsverteilung zu Grunde liegenden Messpunkte gewählt werden, wie beispielsweise 100 Punktkorrespondenzen oder das beste Prozent.

Mit dem Polygonnetz der Messobjektoberfläche, der Modellbibliothek und den Punktkorrespondenzen liegen alle Daten vor, um Hypothesen über die Klasse des Messobjekts 16 und seine 6D-Lage iterativ zu bilden und zu überprüfen. Erfindungsgemäß ist hierfür ein RANSAC-Algorithmus (RANdom SAmple Consensus) vorgesehen. Dabei wird jeweils eine zufällige Untermenge (sample) der Messdaten gezogen, die zur Aufwandsbegrenzung vorzugsweise gerade so viele Elemente enthält, wie für eine Verifikation oder Falsifikation der Hypothese erforderlich sind. Dies wird so lange fortgesetzt, bis eine Hypothese verifiziert oder eine Abbruchbedingung erreicht ist.

Figur 5 erläutert den Schritt 300 zur Erzeugung von Hypothesen aus den Punktkorrespondenzen. Zunächst wird gemäß dem RANSAC-Paradigma in einem Schritt 302 eine kleinstmögliche Zufallsauswahl einiger Punktkorrespondenzen vorgenommen. Um eine 6D-Transformation zu bestimmen, sollten wenigstens drei Punktkorrespondenzen gezogen werden, damit das von ihnen gebildete Dreieck im Messobjekt 16 eine zumindest im Allgemeinen eindeutige Transformation in die 6D-Lage im Modellobjekt erlaubt. Bei Spin Images würden zwei Punkte genügen, da die restliche Information in den Normalenrichtungen vorhanden ist, es hat sich aber gezeigt, dass die Normalenrichtung in der Praxis nicht robust genug bestimmt werden kann und somit drei Punktkorrespondenzen gegenüber nur zwei Punktkorrespondenzen zu bevorzugen sind. Möglich und von der Erfindung umfasst ist aber das Ziehen von weniger als drei Punktkorrespondenzen dennoch, ebenso wie es selbstverständlich möglich ist, mehr als drei Punktkorrespondenzen zu ziehen und die Hypothese damit überzubestimmen.

Die drei gezogenen Punktkorrespondenzen und das von ihnen gebildete Dreieck werden anschließend einer Reihe von Plausibilitätstest unterworfen, bei deren Scheitern jeweils neu gezogen wird. Zunächst wird in einem Schritt 304 festgestellt, ob alle drei gezogene Punktkorrespondenzen zu derselben Modellobjektklasse gehören. Wenn dies nicht der Fall ist, so beruht die gute Punktkorrespondenz, die in Schritt 218 zur Auswahl geführt hat, nur auf jeweils einer zufälligen lokalen Übereinstimmung zwischen Modell und Messobjekt 16. Die somit sichergestellte gemeinsame Modellobjektklasse ist gleichzeitig die Klassifikation des Messobjekts 16 gemäß der erzeugten Hypothese.

In einem Schritt 306 wird festgestellt, ob die Seiten des Dreiecks größer sind als eine Mindestlänge. Andernfalls würde die 6D-Transformation zu ungenau, und wegen des zu geringen Abstandes würde einem lokalen Bereich zu viel Bedeutung zukommen.

Aus ähnlichen Überlegungen heraus wird in einem Schritt 308 sichergestellt, dass das Dreieck nicht zu spitzwinkelig ist, also alle drei Winkel zumindest einen bestimmten Mindestwinkel überschreiten.

Schließlich wird das Dreieck in einem Schritt 310 mit einem Modelldreieck verglichen, das von den korrespondierenden Punkten zu den Messpunkten auf der Modelloberfläche aufgespannt wird. Diese beiden Dreiecke müssen eine hohe Ähnlichkeit aufweisen.

Nun kann in einem Schritt 312 die 6D-Transformation berechnet werden, die das Dreieck in das Modelldreieck überführt. Diese 6D-Transformation und die in Schritt 304 überprüfte gemeinsame Objektklasse der drei Punktkorrespondenzen bilden dann eine in Schritt 314 ausgegebene Hypothese.

Figur 6 erläutert in einem Ablaufschema, wie die soeben in Schritt 300 erzeugte Hypothese kaskadiert verifiziert wird. Ein kaskadierter Hypothesentest wird verwendet, um jeweils die Vorteile von schnellen, recht ungenauen und von langsameren, dafür präzisen Hypothesentests miteinander zu verbinden. Dabei wird nicht eine einzige Verifikationsstrategie, sondern eine Kaskade von mehreren Verifikationsstrategien angewandt. Die einzelnen Verifikationsstrategien sind in dieser Kaskade bevorzugt nach ihrer durchschnittlichen Rechenzeit sortiert, wobei mit der schnellsten begonnen wird. Dadurch können starke Abweichungen in der Hypothese durch die ersten Verifikationsstrategien schnell erkannt werden. Da mit steigender Rechenzeit die Fehlerrate der Verifikationsstrategien sinkt, werden kleinere, aber noch nicht tolerierbare Abweichungen in der Hypothese durch die späteren Verifikationsstrategien sicher erkannt und verworfen.

Daher wird in einem Schritt 402 die Hypothese beim ersten Durchlauf mit der ersten und in weiteren Durchläufen jeweils mit der nächsten Strategie getestet. Wird die Hypothese dabei in einem Schritt 404 akzeptiert, so wird in einem weiteren Schritt 406 auch noch überprüft, ob alle Verifikationsstrategien bereits auf die Hypothese angewandt worden sind. Nur dann wird die Hypothese in einem Schritt 408 angenommen. Andernfalls springt das Verfahren zurück zu dem Schritt 300, in dem eine neue Hypothese erzeugt wird. Um zu verhindern, dass eine Hypothese mehrfach getestet wird, können bereits getestete Hypothesen entsprechend abgelegt und vorab geprüft werden. Grundsätzlich gilt für die Toleranzschwellen, mit denen ein Hypothesentest eine Hypothese noch akzeptiert, dass mehr unterschiedliche Objekte klassifizierbar sind, wenn die Toleranzen höher sind, zugleich aber auch eine höhere Fehlerrate auftritt und umgekehrt.

In einer Liste 410 sind vier Verifikationsstrategien in der Reihenfolge, in der sie abgearbeitet werden, gemäß einer bevorzugten Ausführungsform der Erfindung dargestellt. Für das Verständnis der Erfindung ist nützlich zu wissen, dass die Punktkorrespondenzen für die Verifikation der Hypothesen häufig nicht mehr gebraucht werden. Selbstverständlich können sie neben der Erzeugung von Hypothesen aber auch deren Verifikation in einer oder allen Verifikationsstrategien dienen.

Begonnen wird jede Verifikation einer Hypothese in der dargestellten Ausführungsform somit mit dem Bounding-Box-Test, bei dem das Modell gemäß der hypothetischen Objektklasse mit einem einfachen Hüllkörper umgeben wird, etwa einer Kugel, einem Quader oder einem Zylinder. Dieser Hüllkörper ist zur Einsparung von Laufzeit bevorzugt mit der Modellbibliothek in dem Speicher 30 abgelegt. Der Bounding-Box-Test prüft lediglich, ob einige oder im Grenzfall auch alle Messpunkte des Messobjekts 16 innerhalb dieses Hüllkörpers liegen. Der Test ist damit nicht besonders genau, kann aber rasch falsche Hypothesen ausschließen.

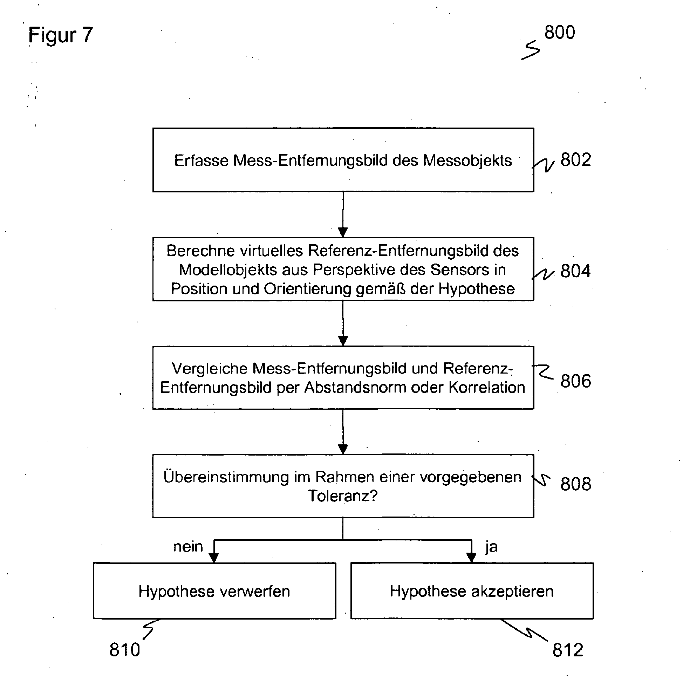

Als zweite Verifikation wird ein Range-Image-Verfahren 800 eingesetzt, das im Detail in Figur 7 dargestellt ist. Dabei wird ein reales Entfernungsbild des Messobjekts 16 mit einem fiktiven Entfernungsbild des Modellobjekts gemäß der hypothetischen Klasse und 6D-Lage verglichen.

Das Range-Image-Verfahren läuft im Einzelnen wie folgt ab. In einem Schritt 802 wird aus den Daten, welche die Aufnahmeeinrichtung 18 bereits im Schritt 202 verfügbar gemacht hat, ein zweidimensionales Entfernungsbild erzeugt, bei dem die Entfernungen durch einen Grauton oder eine Farbe codiert sind. Dieses Entfernungsbild kann gegebenenfalls mit bekannten Bildbearbeitungsverfahren gefiltert, geglättet, kontrastreicher gemacht oder auf andere Weise nachbearbeitet werden.

In einem Schritt 804 wird ein dem Mess-Entfernungsbild entsprechendes virtuelles Referenz-Entfernungsbild des Modellobjekts aus der Perspektive der Aufnahmeeinrichtung 18 berechnet, dem das Modellobjekt gemäß der Klasse und in einer 6D-Lage der Hypothese zu Grunde liegt. Um hierbei nicht aufwändig berechnen zu müssen, welche Polygonflächen von anderen verdeckt sind, kann das Entfernungsbild von "hinten nach vorne" berechnet, also von weit entfernten hin zu näher gelegenen Modellobjektpunkten erzeugt werden, so dass automatisch nur solche Flächen in dem Entfernungsbild dargestellt sind, welche von der Aufnahmeeinrichtung 18 gesehen werden können.

In einem Schritt 806 wird das Mess-Entfernungsbild mit dem Referenz-Entfernungsbild verglichen. Hierzu können im Prinzip dieselben Ähnlichkeitsmaße verwendet werden, wie bei dem Vergleich zwischen Mess-Histogramm und Modell-Histogramm, da mathematisch dasselbe Problem zu lösen ist. Demnach kann beispielsweise eine Abstandsnorm oder ein Korrelationskoeffizient berechnet werden.

Je nach Übereinstimmung von Mess-Entfernungsbild und Referenz-Entfernungsbild wird in einem Schritt 808 entschieden, ob die Hypothese in einem Schritt 810 verworfen oder in einen Schritt 812 akzeptiert wird.

Das Range-Image-Verfahren kann auch basierend auf mehreren Entfernungsbildern ausgeführt werden, die auch zu unterschiedlichen Förderpositionen des Messobjekts 16 aufgenommen werden. Statt Entfernungswerten können Remissionswerte verwendet werden (das Verfahren hieße dann zweckmäßigerweise Remissions-Image-Verfahren).

Zurück zur Figur 6 wird, wenn die beiden Entfernungsbilder dementsprechend nach der zweiten Verifikationsstrategie ähnlich genug sind, gemäß der Liste 410 als drittes Verfahren ein Nearest-Neighbour-Test vorgenommen, bei dem das Gitternetz des Messobjekts 16 mit dem Gitternetz des hypothetischen Modellobjekts verglichen wird.

Zur Beschleunigung kann eine Teilauswahl des Gitternetzes des Messobjekts 16 verwendet werden, beispielsweise jeder zehnte Punkt, oder jeweils nur ein zufälliger Repräsentant aus einer lokalen Umgebung von zehn Punkten. Zu dieser Teilauswahl oder zu dem gesamten Gitternetz wird jeweils ein nächster Nachbar auf dem Gitternetz des Modellobjekts gesucht und der Abstand berechnet. Die Summe all dieser Abstände ergibt ein Maß dafür, wie gut Messobjekt 16 und Modellobjekt übereinstimmen. Auch hier sind andere mathematische Maße denkbar, welche die Ähnlichkeit der Punktwolke gemäß der Teilauswahl mit der Punktwolke des Modellobjekts bewerten.

Die vierte und letzte Verifikationsstrategie ist zugleich auch noch eine weitere Optimierung der hypothetischen 6D-Lage. Dabei wird das Gitternetz des Messobjekts 16 in einem Least-Mean-Square-Verfahren iterativ in bestmögliche Übereinstimmung mit dem Gitternetz des Modellobjekts gebracht (ICP-Algorithmus, Iterative Closest Point). Auch hier kann statt der L₂-Norm nach Least Mean Square ein anderes Maß optimiert werden, also jede andere Abstandsnorm, eine Korrelation oder weitere Maße.

Ein besonderer Vorteil einer ICP-Verifikation am Ende der Verifikationskaskade liegt nicht nur darin, dass dieses mit Abstand aufwändigste Verfahren nur auf wirklich guten Hypothesen ausgeführt wird. Ein großes Problem ist nämlich die lokale statt globale Konvergenz, wo der Algorithmus in einer Scheinlösung stecken bleibt, die nur in gewissen Teilaspekten optimal ist. Durch die vorgeprüfte Hypothese sind die Anfangsbedingungen am Ende der Kaskade schon sehr gut, so dass sowohl eine wesentlich schnellere Konvergenz als auch ein wesentlich seltenerer Klassifikationsfehler aufgrund lokaler Konvergenz zu erwarten ist.

Das Ergebnis des ICP-Algorithmus' wird akzeptiert, sobald ein Überdeckungsgrad an Punkten des Messobjekts 16 mit einem Pendant im Modellobjekt groß genug ist und ein Distanzmaß dieser vom Überdeckungsgrad gemessenen Punkte klein genug ist. Mit anderen Worten muss sich ein hinreichend großer Teil des Messobjekts 16 mit dem Modellobjekt nahe genug überlappen.

Man kann den Nearest-Neighbour-Test als 0.te Iteration des ICP-Algorithmus' auffassen, der also nur einmal die Ähnlichkeit bewertet und nicht optimiert, und ihn entsprechend sehr einfach durch entsprechenden Aufruf des ICP-Verfahrens implementieren.

Die Recheneinheit 28 kann auf Hard- und/oder Softwareebene für eine Pipeline-Struktur ausgelegt sein, bei der die Hypothesenerzeugung des Schrittes 300 mit jedem der sich anschließenden Testverfahren 410 überlappend parallel erfolgt. Alternativ oder gleichzeitig können mehrere Prozessorkerne und/oder Threads vorgesehen sein, mit denen jeweils mehrere Hypothesen gleichzeitig parallelisiert erzeugt und verifiziert werden. Sofern man auch noch den Speicher 30 mit der Modellbibliothek entsprechend mehrfach vorsieht und damit eine gemeinsame Ressource einem Mehrfachzugriff entzieht, skaliert das erfindungsgemäße Verfahren nahezu linear mit der Anzahl der Prozessorkerne.

Es ist denkbar, das Objekt 16 vor der Klassifikation durch das beschriebene Verfahren zu segmentieren. Dadurch können auch Überlagerungen mehrerer Objekte und aus verschiedenen Objekten zusammengesetzte Objekte klassifiziert werden, wodurch sich die Zahl der möglichen Anwendungen und/oder der Durchlauf an Objekten 16 erhöht.

Obwohl das erfindungsgemäße Verfahren anhand von Punktkorrespondenzen beschrieben worden ist, lässt es sich ganz analog auch mit anderen Korrespondenzen ausführen, etwa ausgehend von beliebigen Oberflächenausschnitten oder Polygonen derselben, prinzipiell auch ausgehend von Strukturen, die innerhalb oder außerhalb des Objekts liegen und nicht auf dessen Oberfläche. Diese Korrespondenzen müssen lediglich ein handhabbares Maß für eine lokale Übereinstimmung liefern.

## Patentansprüche

1. Verfahren zum Klassifizieren von Objekten (16) und zur Erkennung von deren Position und Orientierung im Raum, wobei mit einer entfernungsauflösenden Aufnahmeeinrichtung (18) Messobjekt-Datenpunkte einer Messobjektoberfläche erzeugt und mit Hilfe vorab bestimmter Modellobjektdaten aus den Messobjekt-Datenpunkten Hypothesen über die Klasse, die Position und die Orientierung eines Messobjekts (16) aufgestellt und verifiziert werden, wobei mehrere verschiedene Hypothesentests kaskadiert ausgeführt werden derart, dass nur bei Verifikation einer Hypothese durch einen Hypothesentest ein innerhalb der Kaskade nachgeordneter Hypothesentest ausgeführt wird, bis durch Scheitern eines Hypothesentests eine Hypothese falsifiziert oder durch vollständiges Durchlaufen der Kaskade ohne Falsifikation eine Hypothese insgesamt verifiziert wird,
**dadurch gekennzeichnet,**
**dass** die Kaskade der Hypothesentests die folgenden Verfahren in dieser Reihenfolge aufweist: einen Bounding-Box-Test, bei dem eine Auswahl von Messobjekt-Datenpunkten daraufhin überprüft wird, ob sie innerhalb eines Hüllkörpers des Modellobjekts liegt, einen Range-Image-Test, bei dem ein reales Entfernungsbild des Messobjekts (16) mit einem fiktiven Entfernungsbild eines Modellobjekts gemäß der hypothetischen Klasse, Position und Orientierung verglichen wird, einen Nearest-Neighbour-Test, bei dem Punkte eines Gitternetzes des Messobjekts (16) mit nächsten Nachbarn eines Gitternetzes eines hypothetischen Modellobjekts verglichen werden, und ein Test, ob nach einer Positions- und Orientierungsoptimierung, bei der die Messobjekt-Datenpunkte mit einem Oberflächengitter eines Modellobjekts in optimale Übereinstimmung gebracht werden, ein hinreichend großer Teil des Messobjekts 16 mit den Modellobjekt nahe genug überlappt.

2. Verfahren nach Anspruch 1,
wobei die Modellobjektdaten Modell-Histogramme aufweisen, die jeweils ausgehend von einem Punkt der Modelloberfläche die Verteilung der Position oder einer Eigenschaft benachbarter Modelloberflächenpunkte beschreiben, insbesondere als Modell-Histogramme Spin-Images, 3D-shape-contexts oder Remissions-Images verwendet werden, und/oder wobei aus zumindest einem Teil der Messobjekt-Datenpunkte entsprechende Mess-Histogramme erzeugt werden.

3. Verfahren nach Anspruch 2,
wobei die Modellobjektdaten eingelernt und/oder aus einer CAD-Datei berechnet und in einer Modellbibliothek abgelegt werden.

4. Verfahren nach Anspruch 3, wobei Modell-Histogramme, die aufgrund von Symmetrien gleich oder sehr ähnlich sind, nur einmal in der Modellbibliothek abgelegt und mittels Referenzierung oder Hashing zu den Modelloberflächenpunkten jeweils nicht das Modell-Histogramm, sondern nur ein Verweis auf das zugehörige Modell-Histogramm abgelegt wird, und/oder wobei die Modell-Histogramme zur Datenreduktion komprimiert werden.

5. Verfahren nach Anspruch 2, 3 oder 4,
wobei Korrespondenzen, insbesondere Punkt- oder Polygonkorrespondenzen, zwischen Modelloberflächenpunkten und Messoberflächenpunkten ermittelt werden, indem die Ähnlichkeit zwischen Modell-Histogrammen und Mess-Histogrammen bewertet wird, insbesondere durch eine Entfernungsnorm oder eine Korrelation, und wobei ein geringer Anteil von Korrespondenzen mit der besten Ähnlichkeitsbewertung für die Hypothesentests verwendet wird, insbesondere ein Anteil von höchstens 1 % einer Verteilung der Ähnlichkeitsbewertung aller möglichen Vergleiche zwischen Modell-Histogrammen und Mess-Histogrammen.

6. Verfahren nach einem der vorhergehenden Ansprüche,
wobei die Kaskade der Hypothesentests insbesondere auf einem RANSAC-Algorithmus basierend mehrfach durchlaufen wird, bis eine Hypothese in der geforderten Genauigkeit verifiziert, eine Höchstlaufzeit abgelaufen oder eine Obergrenze einer Anzahl zu testender Hypothesen überschritten ist, wobei für jeden Durchlauf der Kaskade eine Hypothese für die Objektklasse, Position und Orientierung des Messobjekts (16) aufgestellt wird, indem eine Untermenge von Punktkorrespondenzen, insbesondere drei Punktkorrespondenzen, zufällig unter der Maßgabe bestimmt wird, dass alle Punktkorrespondenzen der Untermenge zu derselben Objektklasse gehören, und aus der den Punktkorrespondenzen der Untermenge zugehörigen Position und/oder Orientierung eine Position und Orientierung des Messobjekts (16) abgeleitet wird.

7. Verfahren nach einem der vorhergehenden Ansprüche,
wobei die Positions- und Orientierungsoptimierung ein iteratives Least-Mean-Square-Verfahren ist.

8. Verfahren nach einem der vorhergehenden Ansprüche,
wobei der Nearest-Neighbour-Test die 0. Iteration der Positions- und Orientierungsoptimierung basierend auf einer Auswahl der Messobjekt-Datenpunkte ist.

9. Verfahren nach einem der vorhergehenden Ansprüche, wobei der Range-Image-Test die folgenden Schritte aufweist:
- Aufnehmen eines Mess-Entfernungsbildes des Messobjekts (16), bei dem die Entfernungen insbesondere farb- oder graucodiert sind;
- Berechnen eines virtuellen Modell-Entfernungsbildes des Modellobjekts der Hypothese in Position und Orientierung der Hypothese und insbesondere aus der Perspektive der Aufnahmeeinrichtung;
- Vergleichen von Mess-Entfernungsbild und Modell-Entfernungsbild, insbesondere Berechnen einer Abstandsnorm oder einer Korrelation und
- Akzeptieren der Hypothese, wenn der Vergleich im Rahmen einer vorgegebenen Toleranz Übereinstimmung zeigt.

10. Verfahren nach einem der vorhergehenden Ansprüche,
wobei Hypothesen in einer Pipeline parallelisiert getestet werden, indem die nächste Hypothese schon erzeugt wird, während eine oder mehrere vorherige Hypothesen noch getestet werden und/oder indem die Kaskade eines weiteren Hypothesentests gestartet wird, während die vorherige Hypothese noch getestet wird, so dass insbesondere jeder einzelne Hypothesentest innerhalb der Kaskade parallel auf einem eigenen Baustein ausgeführt werden kann, und/oder indem parallel in mehreren Threads oder auf mehreren Bausteinen mehrere Hypothesen erzeugt und getestet werden.

11. Verfahren nach einem der vorhergehenden Ansprüche,
wobei das Messobjekt (16) vorab segmentiert wird, indem Untermengen der Messobjekt-Datenpunkte, die jeweils zu einem Segment gehören, zusammengefasst werden und für jedes Segment für sich Klasse, Position und Orientierung bestimmt wird, um somit zusammengesetzte Messobjekte (16) oder eine Mehrzahl neben- oder übereinander angeordneter Messobjekte (16) zu klassifizieren.

12. Verfahren nach einem der vorhergehenden Ansprüche,
wobei die Messobjekt-Datenpunkte dreidimensional durch Abtasten mit einem Laserscanner oder mittels eines entfernungsauflösenden Bildsensors (18) als Gesamtaufnahme oder durch Zusammensetzen von Zeilen eines relativ bewegten Messobjekts (16) aufgenommen werden, wobei die Entfernungen durch ein Lichtlaufzeitverfahren, ein Lichtschnittverfahren, aktive Triangulation durch Auswerten eines Kontrastmusters oder Stereoskopie bestimmt werden.

13. Vorrichtung (10) zum Klassifizieren von Objekten (16) und/oder zur Erkennung von deren Position und/oder Orientierung im Raum, wobei die Vorrichtung (10) eine entfernungsauflösende optoelektronische Aufnahmeeinrichtung (18) zur Erzeugung von Messobjekt-Datenpunkten einer Messobjektoberfläche, einen Modellspeicher (30) zum Ablegen von Modellobjektdaten und eine Auswertungseinheit (32) aufweist, welche dafür ausgebildet ist, ein Verfahren nach einem der Ansprüche 1 bis 12 auszuführen.

14. Vorrichtung nach Anspruch 13,
wobei die Aufnahmeeinrichtung (18) ein Laserscanner oder eine Stereokamera ist oder wobei die Aufnahmeeinrichtung eine Beleuchtung aufweist, die Lichtpulse oder moduliertes Licht aussenden kann, und wobei die Auswertungseinheit (32) dafür ausgebildet ist, aus einer Lichtlaufzeit oder einer Phasenverschiebung Entfernungen zu bestimmen.

15. Vorrichtung nach Anspruch 13 oder 14,
wobei die Aufnahmeeinrichtung (18) einen pixelauflösenden zeilen- oder matrixförmigen Bildsensor (20) aufweist, und wobei die Auswertungseinheit (24, 32) dafür ausgebildet ist, Messobjekt-Datenpunkte in einem Erfassungsbereich dreidimensional als Gesamtaufnahme oder durch zeilenweises Abtasten eines relativ bewegten Messobjekts (16) zu bestimmen.

## Claims

1. A method for the classification of objects (16) and for the recognition of their position and their orientation in space, wherein measurement object data points of a measurement object surface are generated using a distance resolving receiver unit (18) and, with the aid of model object data determined in advance, hypotheses on the class, the position and the orientation of a measurement object (16) are proposed and verified from the measurement object data points, wherein a plurality of different hypothesis tests are executed cascaded in such a way that only on verification of a hypothesis through a hypothesis test is a subsequent hypothesis test carried out within this cascade, until either a hypothesis is falsified by the failure of a hypothesis test or a hypothesis is verified as a whole through a complete run through a cascade without falsification,
**characterized in that**
the cascade of hypotheses tests includes the following methods in this sequence: a bounding box test, in which a selection of measurement object data points is tested to see whether they lie within an envelope body of the measurement object, a range image test in which a real distance image of the measurement object (16) is compared to a virtual distance image of the model object in accordance with the hypothetical class, position and orientation, a nearest neighbour test in which the grid mesh of the measured object (16) is compared with nearest neighbours of the grid mesh of a hypothetical model object, and a test whether, after a position and orientation optimization in which the measurement object data points are brought into an optimal match with a surface grid of a model object, a sufficient large part of the measured object (16) matches the model object close enough.

2. A method in accordance with claim 1,
wherein the model object data include model histograms which, respectively starting from a point of the model surface, describe the position distribution or a property of neighbouring model surfaces points, in particular spin images, 3D shape contexts or remission images are used as model histograms and/or wherein corresponding measurement histograms are generated from at least one part of the measurement object data points.

3. A method in accordance with claim 2,
wherein the model object data are taught and/or are calculated from a CAD file and archived in a model library.

4. A method in accordance with claim 3,
wherein model histograms which are equal or very similar, due to symmetries, are only stored once in the model library and using referencing or hashing to the model surface points only the reference to the corresponding model histogram is stored in each case but not the respective model histogram and/or wherein the model histograms are compressed for data reduction.

5. A method in accordance with claims 2, 3 , or 4,
wherein correspondences, in particular point or polygon correspondences, are determined between model surface points and measurement surface points in that the similarity between model histograms and measurement histograms are evaluated, in particular through a distance norm or a correlation, and wherein a small proportion of correspondences with the best similarity evaluation are used for the hypothesis tests, in particular a proportion of at most 1 % of a distribution of the similarity evaluation of all possible comparisons between model histograms and measurement histograms.

6. A method in accordance with any of the preceding claims,
wherein the cascade of the hypotheses tests, in particular based on a RANSAC algorithm, are run through a plurality of times until either a hypothesis is verified to the required accuracy, a highest run time is exceeded or an upper limit of a number of hypothesis to be tested is exceeded, wherein for each run through the cascade a hypothesis for the object class, position and orientation of the measurement object (16) is proposed, in that a subset of point correspondences, in particular three point correspondences, is randomly determined under the requirement that all point correspondences of the subset belong to the same object class and that from the position and/or the orientation belonging the point correspondences of the subject a position and orientation of the measurement object (16) are determined.

7. A method in accordance with any of the preceding claims,
wherein the position and orientation optimization is an iterative least mean square method.

8. A method in accordance with any of the preceding claims,
wherein the nearest neighbour test is the 0^{th} iteration of the position and orientation optimization based on a selection of the measurement object data points.

9. A method in accordance with any of the preceding claims,
wherein the range-image-test includes the following steps:
- recording of a measurement distance image of the measurement object (16), in which the distances are in particular colour coded or grey coded;
- calculation of a virtual model distance image of the model object of the hypothesis in position and orientation of the hypothesis and in particular from the perspective of the recording unit;
- comparison of measurement distance images and model distance images, in particular calculation of a distance norm or a correlation and
- acceptance of the hypothesis, if the comparison shows a match in the scope of a preset tolerance.

10. A method in accordance with any of the preceding claims,
wherein hypotheses are tested in parallel in a pipeline, in that the next hypothesis is already being generated, while one or a plurality of hypotheses are still being tested and/or in that the cascade of a further hypothesis test is started, while the previous hypothesis is still being tested so that, in particular, each individual hypothesis test within a cascade can be executed in parallel on an own component, and/or in that in parallel a plurality of threads or a plurality of hypotheses are generated and tested on a plurality of components.

11. A method in accordance with any of the preceding claims,
wherein the measurement object (16) is segmented in advance, in that subsets of the measurement object data points, which respectively belong to a segment, are combined and for every segment the class, position and orientation is determined, in order to classify combined measurement objects (16) or a plurality of measurement objects (16), arranged next to each other or above of each other.

12. A method in accordance with any of the preceding claims,
wherein the measurement object data points are recorded three-dimensionally by sampling with a laser scanner or by means of a distance resolving image sensor (18) as a composite recording or through the combination of lines of a relatively moved measurement object (16), wherein the distances are determined by either a light transit time process, a light cutting process, active triangulation by the evaluation of a contrast pattern or by stereoscopy.

13. An apparatus (10) for the classification of objects (16) and/or the recognition of their position and/or their orientation in space, wherein the apparatus (10) includes a distance resolving optoelectronic receiver unit (18) for the generation of measurement object data points of a measurement object surface, a model memory (30) for storing model object data and an evaluation unit (32) which is configured to execute a method according to any of claims 1 to 12

14. An apparatus (10) in accordance with claim 13,
wherein the receiver unit (18) is a laser scanner or a stereo camera or wherein the receiver unit includes lighting, which can emit light pulses or modulated light and wherein the evaluation unit (32) is designed to determine distances from a light run time or a phase shift.

15. An apparatus (10) in accordance with claims 13 or 14,
wherein the receiver unit (18) includes a pixel resolving linear or matrix -like image sensor (20), and wherein the evaluation unit (24, 32) is configured to determine measurement data points in a detection area three dimensionally as a composite recording or by likewise scanning of a relatively moved measurement object (16).

## Revendications

1. Procédé pour classifier des objets (16) et pour identifier leur position et leur orientation dans l'espace, des points de données d'objet mesuré d'une surface d'objet mesuré étant générés avec un dispositif d'enregistrement à résolution de distance (18) et des hypothèses concernant la classe, la position et l'orientation d'un objet mesuré (16) étant établies et vérifiées à l'aide de données d'objet modèle définies auparavant à partir des points de données d'objet mesuré, plusieurs tests d'hypothèse différents étant réalisés en cascade, de telle sorte qu'un test d'hypothèse placé en aval à l'intérieur de la cascade n'est réalisé que si une hypothèse est vérifiée par un test d'hypothèse, jusqu'à ce qu'une hypothèse soit falsifiée par l'échec d'un test d'hypothèse ou qu'une hypothèse soit complètement vérifiée par la réalisation complète de la cascade sans falsification,
**caractérisé en ce que**
la cascade des tests d'hypothèse présente les procédés suivants dans cet ordre de succession : un test "Bounding-Box", dans lequel une sélection de points de données d'objet mesuré est vérifiée ensuite pour savoir si elle se situe à l'intérieur d'un corps enveloppant de l'objet modèle, un test "Range-Image", dans lequel une image d'espacement réelle de l'objet mesuré (16) est comparée à une image de distance fictive d'un objet modèle selon la classe hypothétique, la position et l'orientation, un test "Nearest-Neighbour", dans lequel des points d'un quadrillage de l'objet mesuré (16) sont comparés avec des prochains points voisins d'un quadrillage d'un objet modèle hypothétique, et un test pour savoir si, après une optimisation de position et d'orientation, lors de laquelle les points de données d'objet mesuré sont mis en concordance optimale avec une grille de surface d'un objet modèle, une partie suffisamment grande de l'objet mesuré 16 se chevauche de façon suffisamment proche avec l'objet modèle.

2. Procédé selon la revendication 1,
les données d'objet modèle présentant des histogrammes de modèle, qui décrivent à chaque fois, à partir d'un point de la surface modèle, la répartition de la position ou d'une propriété de points voisins de surface modèle, en particulier sous forme d'histogrammes modèles "Spin-Images", "3D-shape-contexts" ou de "Remissions-Images", et/ou des histogrammes de mesure appropriés étant générés à partir d'au moins une partie des points de données d'objet mesuré.

3. Procédé selon la revendication 2,
les données d'objet modèle étant intégrées dans l'apprentissage et/ou étant calculées à partir d'un fichier de DAO et étant déposées dans une bibliothèque modèle.

4. Procédé selon la revendication 3, des histogrammes de modèle, qui sont identiques ou très similaires en raison de symétries, n'étant déposés qu'une seule fois dans la bibliothèque modèle et à chaque fois, non pas l'histogramme modèle, mais seulement un renvoi à l'histogramme de modèle spécifique étant déposé au moyen de référencement ou "hashing" par rapport aux points de surface modèle, et/ou les histogrammes de modèle étant comprimés pour la réduction des données.

5. Procédé selon la revendication 2, 3 ou 4,
des correspondances, en particulier des correspondances de point ou de polygone, étant déterminées entre des points de surface modèle et des points de surface mesurée en évaluant la similitude entre des histogrammes de modèle et des histogrammes de mesure, en particulier par une norme de distance ou une corrélation, et une faible partie de correspondances avec la meilleure évaluation de similitude étant utilisée pour les tests d'hypothèse, en particulier une fraction maximale de 1 % d'une répartition de l'évaluation de similitude de toutes les comparaisons possibles entre des histogrammes de modèle et des histogrammes de mesure.

6. Procédé selon l'une des revendications précédentes,
la cascade des tests d'hypothèse étant effectuée plusieurs fois en particulier sur la base d'un algorithme de RANSAC, jusqu'à ce qu'une hypothèse soit vérifiée dans la précision exigée, qu'un temps de marche maximal soit écoulé ou qu'une limite supérieure d'un nombre d'hypothèses à tester soit dépassé, une hypothèse étant établie pour chaque passage de la cascade pour la classe d'objet, la position et l'orientation de l'objet mesuré (16), en déterminant une sous-quantité de correspondances de point, en particulier trois correspondances de point, de façon aléatoire à la condition que toutes les correspondances de point de la sous-quantité fassent partie de la même classe d'objet, et une position et une orientation de l'objet mesuré (16) étant déduites de la position et/ou de l'orientation spécifique(s) aux correspondances de point de la sous-quantité.

7. Procédé selon l'une des revendications précédentes,
l'optimisation de position et d'orientation étant un procédé "Least-Mean-Square" itératif.

8. Procédé selon l'une des revendications précédentes,
le test "Nearest-Neighbour" étant la 0^{ième} itération de l'optimisation de position et d'orientation sur la base d'une sélection des points de données d'objet mesuré.

9. Procédé selon l'une des revendications précédentes, le test "Range-Image" présentant les étapes suivantes :
- enregistrement d'une image de distance de mesure de l'objet mesuré (16), lors duquel les distances sont codées en particulier en couleur ou en gris ;
- calcul d'une image virtuelle de distance de modèle de l'objet modèle de l'hypothèse dans la position et l'orientation de l'hypothèse et en particulier à partir de la perspective du dispositif d'enregistrement ;
- comparaison de l'image de distance de mesure et de l'image de distance de modèle, en particulier calcul d'une norme de distance ou d'une corrélation et
- acceptation de l'hypothèse, lorsque la comparaison montre une concordance dans le cadre d'une tolérance prédéfinie.

10. Procédé selon l'une des revendications précédentes,
des hypothèses étant testées en parallèle dans un pipeline du fait que la prochaine hypothèse est déjà générée, alors qu'une ou plusieurs hypothèses antérieures sont encore testées et/ou du fait que la cascade d'un autre test d'hypothèse est démarrée, alors que l'hypothèse antérieure est encore testée, de sorte qu'en particulier chaque test d'hypothèse individuel peut être réalisé à l'intérieur de la cascade en parallèle sur un élément constitutif propre, et/ou du fait que plusieurs hypothèses sont générées et testées en parallèle dans plusieurs "threads" ou sur plusieurs éléments constitutifs.

11. Procédé selon l'une des revendications précédentes,
l'objet mesuré (16) étant segmenté au préalable du fait que des sous-quantités des points de données d'objet mesuré, qui font partie à chaque fois d'un segment, sont regroupées et que la classe, la position et l'orientation sont déterminées pour chaque segment en soi, afin de classifier ainsi des objets mesurés (16) assemblés ou une pluralité d'objets mesurés (16) disposés les uns à côté des autres ou les uns au-dessus des autres.

12. Procédé selon l'une des revendications précédentes,
les points de données d'objet de mesure étant enregistrés en trois dimensions par balayage avec un scanner laser ou au moyen d'un capteur d'image (18) à résolution de distance comme enregistrement global ou étant enregistrés par assemblage de lignes d'un objet mesuré (16) déplacé de façon relative, les distances étant déterminées par un procédé de temps de propagation de lumière, un procédé de coupe optique, triangulation active par analyse d'un modèle de contraste ou stéréoscopie.

13. Dispositif (10) pour la classification d'objets (16) et/ou pour l'identification de leur position et/ou de l'orientation dans l'espace, le dispositif (10) présentant un dispositif d'enregistrement (18) optoélectronique, à résolution de distance, pour générer des points de données d'objet mesuré d'une surface d'objet mesuré, une mémoire modèle (30) pour la dépose de données d'objet modèle et une unité d'analyse (32), qui est conçue pour réaliser un procédé selon l'une des revendications 1 à 12.

14. Dispositif selon la revendication 13,
le dispositif d'enregistrement (18) présentant un scanner laser ou une caméra stéréo ou le dispositif d'enregistrement présentant un éclairage, qui peut émettre des impulsions de lumière ou de la lumière modulée, et l'unité d'analyse (32) étant conçue pour déterminer des distances à partir d'un temps de propagation de lumière ou d'un décalage de phase.

15. Dispositif selon la revendication 13 ou 14,
le dispositif d'enregistrement (18) présentant un capteur d'image (20) à résolution de pixel, en forme de ligne ou de matrice, et l'unité d'analyse (24, 32) étant conçue pour déterminer des points de données d'objet de mesure dans une plage d'enregistrement en trois dimensions sous forme d'enregistrement global ou par balayage ligne par ligne d'un objet mesuré (16) déplacé de façon relative.
